# EUROPEAN PATENT SPECIFICATION

(11) **EP 0 539 269 B1**
(45) Date of publication and mention of the grant of the patent: **12.03.1997**
(21) Application number: 92402816.0
(22) Date of filing: 15.10.1992
(51) Int. Cl.: B60K 1/04, H01M 2/22, H01M 2/10, B60R 16/04, H01M 10/50, B62M 23/02

(54) **Battery unit in an electric motor vehicle**
Batterieeinheit in einem Elektrofahrzeug
Unité de batterie dans un véhicule automobile électrique

(30) Priority: 19.10.1991 JP 299874/91; 30.03.1992 JP 103745/92
(43) Date of publication of application: 28.04.1993
(73) Proprietor: HONDA GIKEN KOGYO KABUSHIKI KAISHA, Minato-ku, Tokyo (JP)
(72) Inventor: Sugioka, Kouichi, c/o Kabushiki Kaisha Honda, Wako-shi, Saitama (JP); Ogawa, Masao, c/o Kabushiki Kaisha Honda, Wako-shi, Saitama (JP); Takamatsu, Hidetoshi, c/o Kabushiki Kaisha Honda, Wako-shi, Saitama (JP); Sako, Hiroyuki, c/o Kabushiki Kaisha Honda, Wako-shi, Saitama (JP)
(74) Representative: Dubois-Chabert, Guy

(56) References cited:
- EP-A- 0 003 888
- EP-A- 0 050 057
- AT-A- 327 023
- DE-A- 4 018 347
- DE-C- 515 051
- DE-C- 801 371
- FR-A- 639 011
- FR-A- 2 168 886
- FR-A- 2 180 709
- FR-A- 2 486 311
- GB-A- 1 298 046
- GB-A- 2 027 978
- PATENT ABSTRACTS OF JAPAN vol. 16, no. 34 (M-1204)(5077) 28 January 1992 & JP-A-03 243 484 ( HONDA MOTOR CO LTD. ) 30 October 1991

## Description

### BACKGROUND OF THE INVENTION

### Field of the Invention

This invention relates to a battery unit in an electric motor vehicle, and more particularly to a battery unit for a straddling type electric motor vehicle such as an electric motor scooter or the like. The widthwise dimensions of the battery permit a large bank angle of the electric motor vehicle.

### Description of Background Art

Electric motor vehicles are disclosed, for example, in Japanese Laid-Open Patent Application H3-243484 wherein a straddling type electric motor vehicle is set forth. In this prior art electric motor vehicle, a battery is mounted beneath a line drawn through the axes of the front and rear wheels, thereby to lower the center of gravity of the vehicle as a whole. The vehicle is also provided with a cooling air duct through which cooling air is sent to the electric motor.

However, in actual applications, the above-mentioned prior art electric motor vehicle needs to mount a box-shaped battery in a lower position on the vehicle. This results in an objectionably large dimension in the battery width across the center line of the vehicle body and consequently restricting the bank angle when taking a "lean-with" or similar driving posture.

Where a battery is accommodated in a battery box as in the above-mentioned prior art electric motor vehicle, it is desirable to provide means for effectively cooling the battery in actual applications since it generates heat at the time of charging or discharging.

In Japanese Patent Application H2-162242, a prior application, the inventor discloses an embodiment, wherein a scooter type vehicle body includes a step floor, supporting a battery by means of a floor frame extended in the longitudinal direction along the lower side of the step floor. The battery is used as a power source for driving a power unit which is pivotally supported on a rear portion of the floor frame and which includes a combination of an electric motor and a belt type transmission.

Further, the above-described prior art electric motor vehicle needs a filter for removing dust, especially conductive dust which might be entrained on cooling air flows through the cooling air duct. This filter acts as a resistance to the flow of cooling air, barring improvements in cooling effect.

Document EPO-A-050 057 shows an electrically powered vehicle comprising four battery boxes, each battery box being adapted to receive a battery assembly. Two battery boxes are located on each side of a central portion of the vehicle body. The two other battery boxes are located on each side of the rear wheel.

Document GB-A-2 027 978 shows a battery unit comprising one or several battery blocks. Each battery block is formed of a plurality of cell blocks arranged in parallel and defining intermediate spaces therebetween. The cell blocks are arranged horizontally or vertically and can have a circular cross-section. In order to reach the operating temperature of the battery unit, a blower supply heated air to the battery block, through the ducts defined by the intermediate spaces provided between the cell blocks.

### SUMMARY AND OBJECTS OF THE INVENTION

It is an object of the present invention to provide a battery unit for an electric motor vehicle which permits reduction of the width of the lower side of the battery, and which is capable of cooling the battery effectively and removing magnetic dusts from cooling air for the electric motor without resorting to a filter. This object is performed by the invention defined in claim 1.

An electric motor vehicle includes a battery unit mounted on the vehicle body to supply current to the electric motor. The battery unit is formed in an elongated shape in outer configuration and located under the vehicle body with the lengthy side of the battery unit disposed in the longitudinal direction of the vehicle body.

In the electric motor vehicle, an arrangement may be employed in which the battery unit includes battery assemblies each consisting of a bundle of a plurality of batteries of an elongated shape. The vehicle body includes a front vehicle body for supporting a front wheel, a rear vehicle body for supporting a rear wheel, and an intermediate vehicle body interconnecting the front and rear vehicle bodies. The battery unit is suspended under the intermediate vehicle body, providing a foot rest on the upper side of the intermediate vehicle body.

The battery unit includes battery assemblies each having a plural number of elongated batteries bundled together to extend in the longitudinal direction of the motor vehicle and in a small gap relationship with adjacent batteries. The battery assemblies are accommodated in a battery box having ventilation holes formed in a front portion for introduction of cooling air at positions corresponding to the gap spaces between the individual batteries. An air exhaust hole is formed at least in a side or rear portion of the battery box.

A hollow pipe constitutes a body frame of a straddling type electric motor vehicle, communicating the air exhaust hole with the pipe frame to exhaust air therethrough, or providing an air exhauster in the air exhaust hole for forcibly exhausting air from the battery case. In the case of a straddling type electric motor vehicle with a cowled frame, there may be employed a modified arrangement in which the discharge port of the air exhauster is opened into a space which is surrounded by the cowl.

The electric motor vehicle is operated on the power of an electric motor, and provided with a cooling air duct for conducting the flow of cooling air toward the electric motor and a magnet located on an inner wall surface of the cooling air duct.

The battery unit is formed into an elongated shape extending in the longitudinal direction of the vehicle, so that there can be obtained a great degree of freedom with respect to the widthwise profile of the battery unit, namely, with respect to the widthwise dimensions of the battery unit. Thus, a large bank angle may be obtained without inviting increases in vehicle body size when applied to a straddling type electric motor vehicle.

The battery unit is composed of battery assemblies, each including a bundle of a plurality of elongated batteries, giving a great degree of freedom in deciding the profile of the battery unit. Further, the arrangement of suspending the battery unit on the lower side of an intermediate vehicle body portion, which interconnects front and rear vehicle body portions, permits a great degree of freedom in the battery layout, as well as facilitated adjustments of the vehicle body weight into an appropriately balanced state in the longitudinal direction thereof.

The battery assemblies include individual batteries joined together in such a way as to form gap spaces between adjacent batteries. The batteries are placed in a battery box with ventilation holes in a front portion thereof in positions in alignment with the gap spaces between the individual batteries to cool the battery unit effectively with the flow of air which is taken in through the ventilation holes while the vehicle is in motion.

The battery unit is supported on a pipe-like vehicle body frame of a straddling type electric motor vehicle and arranged to discharge air through the pipe-like body frame, effectively utilizing the vehicle body frame to realize a reduction in size as a whole. An air exhauster is provided to discharge air forcibly, thereby cooling the battery effectively. When applied to a motor bicycle, air is discharged into a space under a cowl to prevent intrusion of rain or water without the necessity of providing a cover exclusively for this purpose.

Magnetic dust such as iron powder, entrained in the flow of cooling air to the electric motor, is retained by a magnet, so that it becomes possible to simplify the air filter and thus to minimize its resistance to the flow of cooling air. Thus, cooling air is supplied to the electric motor at a sufficient flow rate.

Further scope of applicability of the present invention will become apparent from the detailed description given hereinafter. However, it should be understood that the detailed description and specific examples, while indicating preferred embodiments of the invention, are given by way of illustration only.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Figure 1 is a side view of an electric motor scooter shown as an example of an electric motor vehicle for application of the present invention;
Figure 2 is a partly cutaway plan view of the electric motor scooter;
Figure 3 is a fragmentary front view of an enlarged scale of the electric motor scooter;
Figure 4 is a rear view of the electric motor scooter;
Figure 5 is a side view of vehicle body frames of the electric motor scooter;
Figure 6 is a plan view of the vehicle body frames;
Figure 7 is a fragmentary front view on an enlarged scale of the vehicle body frames;
Figure 8 is a sectional view taken on line 8-8 of Figure 5;
Figure 9 is a view taken in the direction of arrow 9 in Figure 5;
Figure 10 is an enlarged sectional view of an electric motor and associated component parts of the electric motor scooter;
Figure 11 is a sectional view of a battery unit and associated component parts of the electric motor scooter;
Figure 12 is a fragmentary sectional view of an enlarged scale of a vehicle body frame of the electric motor scooter;
Figures 13(a) and 13(b) are a sectional view and a plan view of major component parts employed for the electric motor scooter;
Figure 14 is an exploded perspective view of the battery unit being loaded onto the electric motor scooter;
Figure 15 is an exploded perspective of the battery unit in a state different from Figure 14;
Figure 16 is an exploded perspective view of the battery unit in a state different from Figures 14 and 15;
Figure 17 is an exploded perspective view of the battery unit in a state different from Figures 14, 15 and 16;
Figure 18 is a side view of a battery box constituting part of the battery unit;
Figure 19 is a front view of the battery box;
Figure 20 is a side view of the battery assemblies constituting the battery box;
Figure 21 is a developed view of the battery assemblies constituting the battery box;
Figure 22 is a diagrammatic view explanatory of the manner of connecting one electrodes of the battery assemblies;
Figure 23 is a diagrammatic view explanatory of the manner of connecting the other electrodes of the battery assemblies;
Figure 24 is a circuit diagram of a control system for the electric motor scooter;
Figure 25 is a fragmentary front view on an enlarged scale of battery assemblies in another embodiment of the invention;
Figure 26 is a perspective view of a component part used for the battery assemblies;
Figure 27 is a perspective view of major components of the invention according to another embodiment;
Figure 28 is a schematic transverse sectional view of another embodiment of the present invention;
Figure 29 is a perspective view of another embodiment of the present invention;
Figure 30 is a sectional view of another embodiment of the present invention;
Figure 31 is a transverse sectional view of another embodiment of the present invention;
Figure 32 is a transverse sectional view of another embodiment of the present invention;
Figure 33 is a transverse sectional view of another embodiment of the present invention;
Figure 34 is a transverse sectional view of another embodiment of the present invention;
Figure 35 is a transverse sectional view of another embodiment of the present invention;
Figure 36 is a transverse sectional view of another embodiment of the present invention;
Figure 37 is a transverse sectional view of another embodiment of the present invention.

### DETAILED DESCRIPTION OF THE PREFERRED EMBODIMENTS

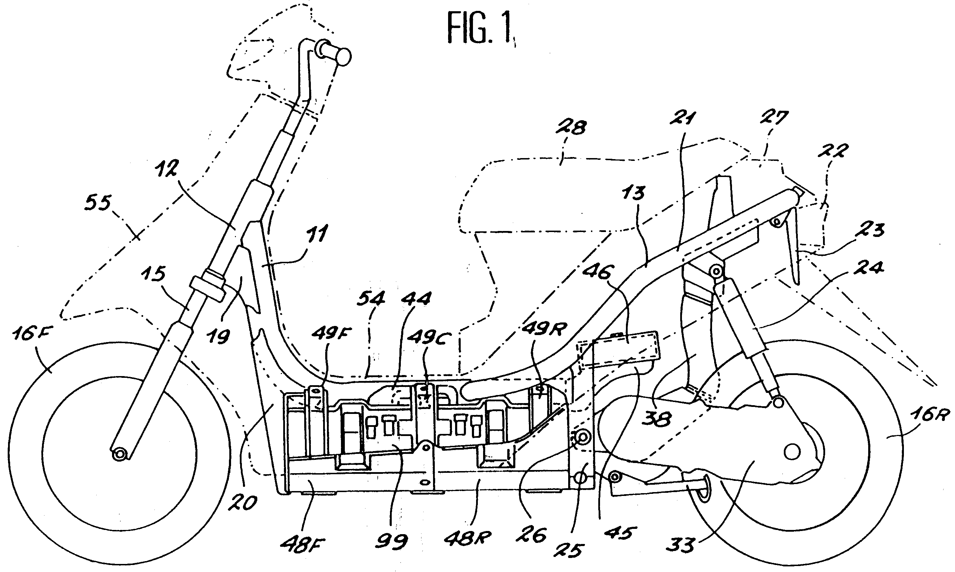

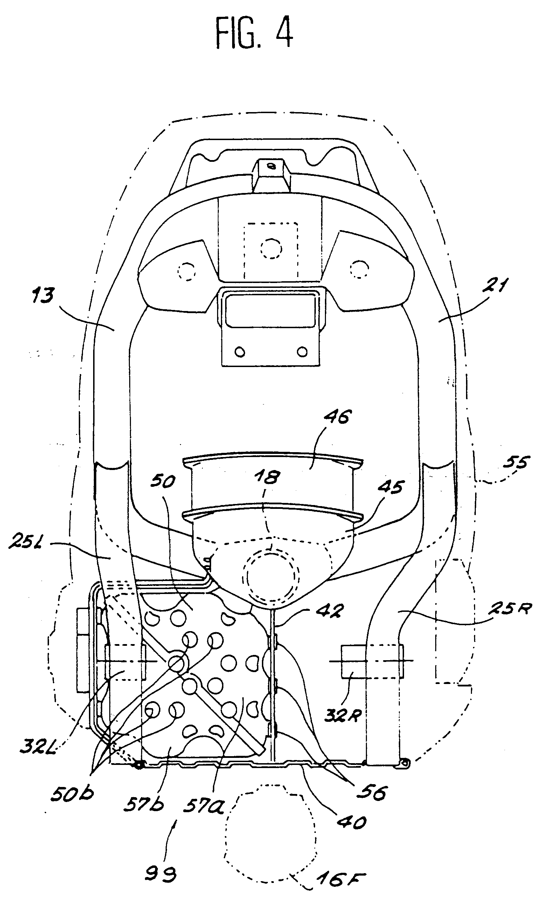

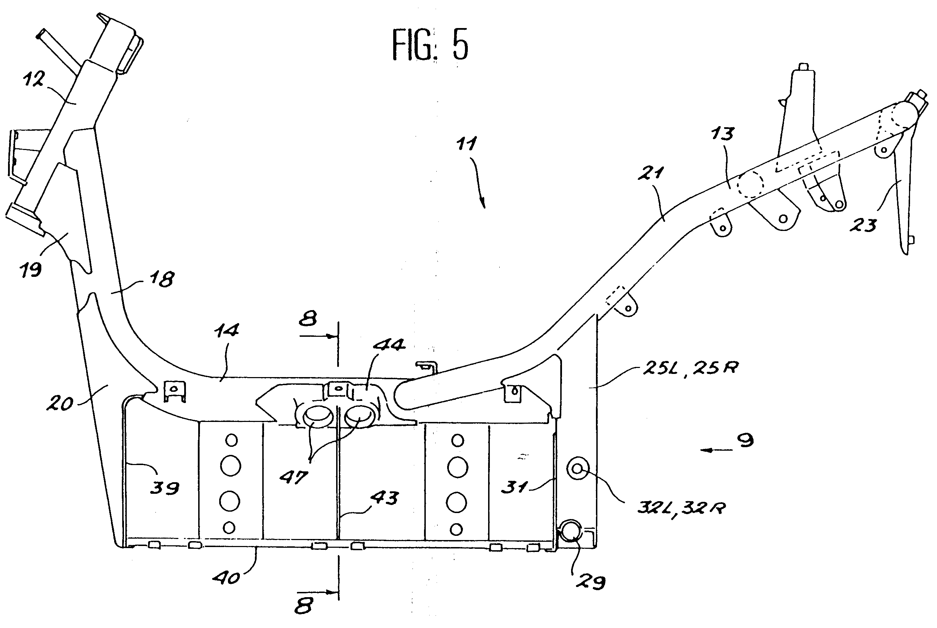

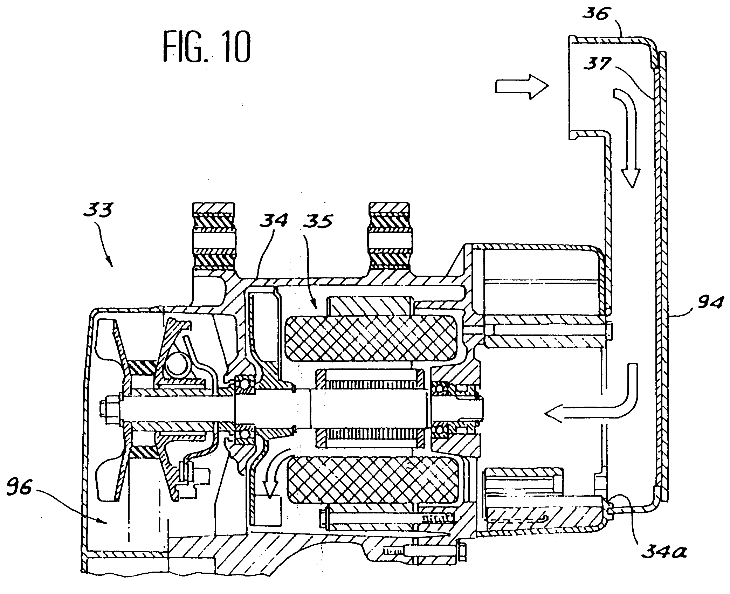

Figures 1 through 24 illustrate an embodiment of the invention as applied to a straddling type electric motor vehicle, of which Figures 1 to 4 illustrate views of the straddling type electric motor vehicle which is an electric motored scooter, Figures 5 to 9 illustrate vehicle body frames of the electric motored scooter, and Figures 10 to 24 illustrate other major components of the vehicle.

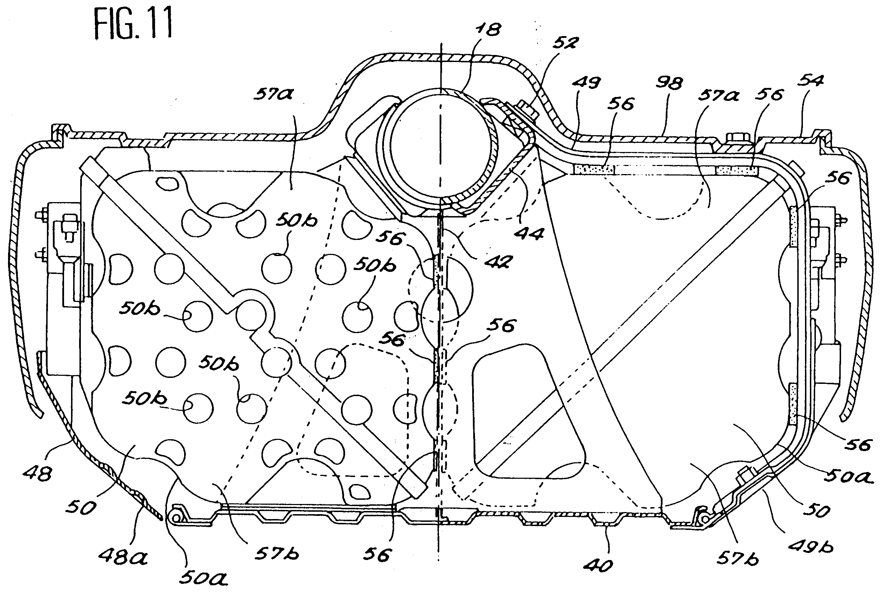

In various figures, a vehicle body frame 11 includes a head pipe or front frame 12 connected to a rear frame 13 through an intermediate frame 14. As is well known in the art, a front wheel 16F is supported on a front fork 15 of the head pipe 12 steerably in association with a steering handle 17. A front cover 55, a center cover 54 and a rear cover 27 are provided and affixed to the vehicle body frame 11. The center cover 54 is formed with a step floor 98, as illustrated in Figure 11, on an upper side, so that the driver can place his or her feet thereon. A seat 28 is mounted on top of the rear cover 27, and a tail lamp 22 and a number plate mount portion 23 are provided on tail portions of the rear cover 27. In the drawings, for the sake of simplicity of illustration, the covers 27, 54 and 55 are shown as one unitary body without indicating their boundaries.

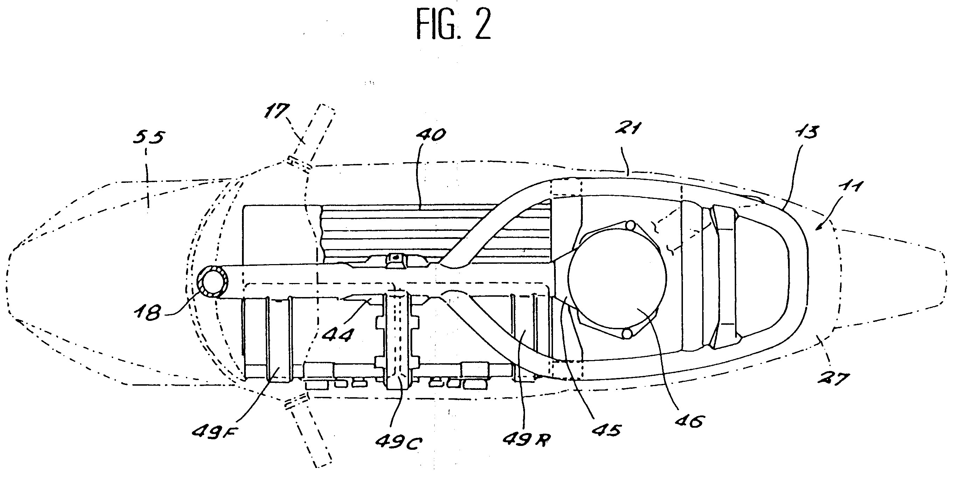

The rear frame 13 is provided with a rear tube 21 which is formed by bending a pipe substantially into a U-shape. As shown in Figures 2, 5 and 6, the rear tube 21 is extended obliquely upwardly toward its folded rear end of the U-shape, and has both of its fore ends securely fixed to the intermediate frame 14 by welding or other suitable means. The rear tube 21 is provided with a cushion 24 between its intermediate portion and a power swing unit, which will be described later, and wrapped under the rear cover 27 on its top and opposite lateral sides.

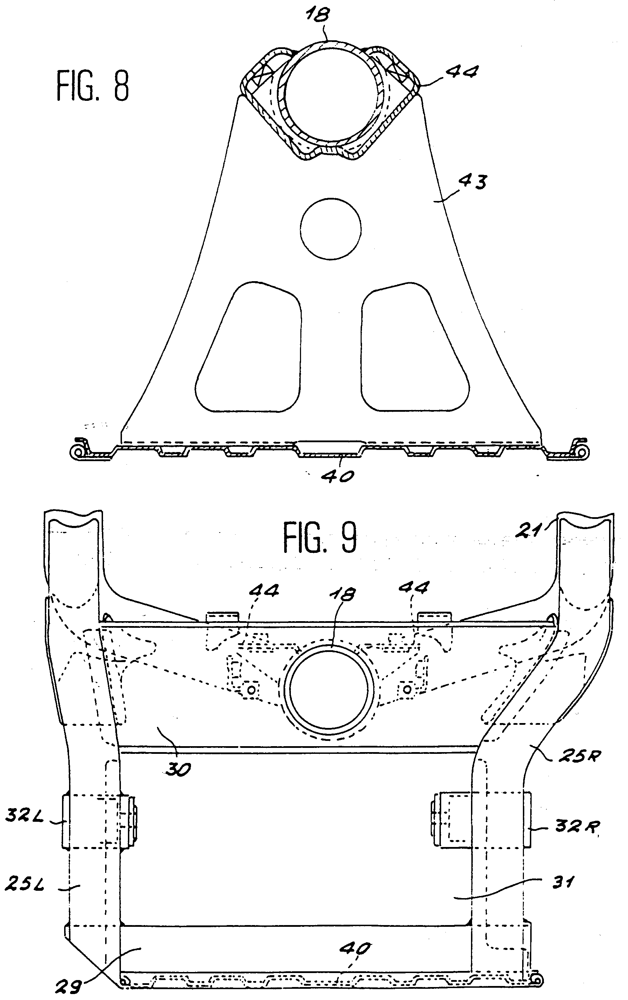

Further, as shown particularly in Figure 9, the rear tube 21 includes mounting pipes 25R and 25L (hereinafter indicated by the reference numeral alone without the suffix letter whenever necessary) suspended on its opposite sides in a front portion each at a position substantially in alignment with the rear end of a center tube 18 which will be described later. The mounting pipes 25L and 25R are securely welded to the rear tube 21 at the respective upper ends, and a cross pipe 29 is securely bridged between their lower ends. Further, a cross plate 30 is securely bridged between upper portions of the mounting pipes 25 by welding or other suitable means, along with a rear plate 31 which is positioned under the cross plate 30. A pivot shaft 26 is bridged behind the rear plate 31 through collars 32L and 32R.

The cross plate 30 has its upper and lower edges folded back substantially at right angles to present a U-shape in section, and is securely welded to the mounting pipes 25 at its opposite ends. Extending rearwardly through the cross plate 30 is the rear end of a center tube 18 which will be described hereinafter, the rear end of the center tube 18 is opened to a rear duct 45 which is securely fixed on the rear surface of the cross plate 30. An air exhauster 46 is provided in an upper portion of the rear duct 45. More specifically, the air exhauster 46 is located within the rear cover 27 and has its air discharge port opened upwardly within the rear cover 27. The air exhauster 46 is provided with a fan drive motor, which is connected to a controller as will be described later, thereby to drive a fan for forcibly discharging air, cooling air, which will be described hereinafter.

The rear plate 31 is welded to the mounting pipes 25 at its opposite side edges, and also welded to the lower edge of the cross plate 30 at its upper edge, closing the opening between the two mounting plates 25 in cooperation with the cross plate 30. The rear plate 31 has its lower edge bent substantially at right angles in the forward direction. An under plate is mounted between the folded lower edge of the rear plate 31 and the lower edge of the front plate. A power swing unit 33 is rockably supported on the pivot shaft 26, and a rear wheel 16R is supported on the rear end of the power swing unit 33.

As shown in Figure 10, the power swing unit 33 is provided with an electric motor 35 which is accommodated within a unit case 34 together with a belt type stepless transmission 86. The unit case 34 is provided with an air induction opening 34a which is opened toward the electric motor 35, and an air discharge opening which is formed in its rear portion although not shown. One end of the duct 36 is connected to the air induction opening 34a. The other end of the duct 36 extends substantially upwardly and is connected to a flexible duct tube 38, see Figure 1. A magnet 37 is bonded on an inner wall surface of the duct. The duct tube 38 extends upward within the rear cover 27 and is opened at its upper end which is fixed by a fixation member within the rear cover 27. Duct tube 38 is set in position such that its opened position is located above the above-mentioned discharge port of the air exhauster 46.

The duct 36 is provided with an opening in its side wall, and this side opening is normally closed by a closure plate 94 with the magnet 37 bonded thereto. The magnet 37 is exposed to air flows in the duct 36 to function as a partition wall of the air passage. The closure plate 94 is detachably mounted in position by the use of screws or the like. The magnet 37 retains magnetic dust like iron powder which is entrained in the flow of air in the duct 36. The dust caught on the magnet 37 can be cleaned off after detaching the closure plate 94. The construction of the swing unit 33 is described in detail in the afore-mentioned patent publication, so that its description is omitted here.

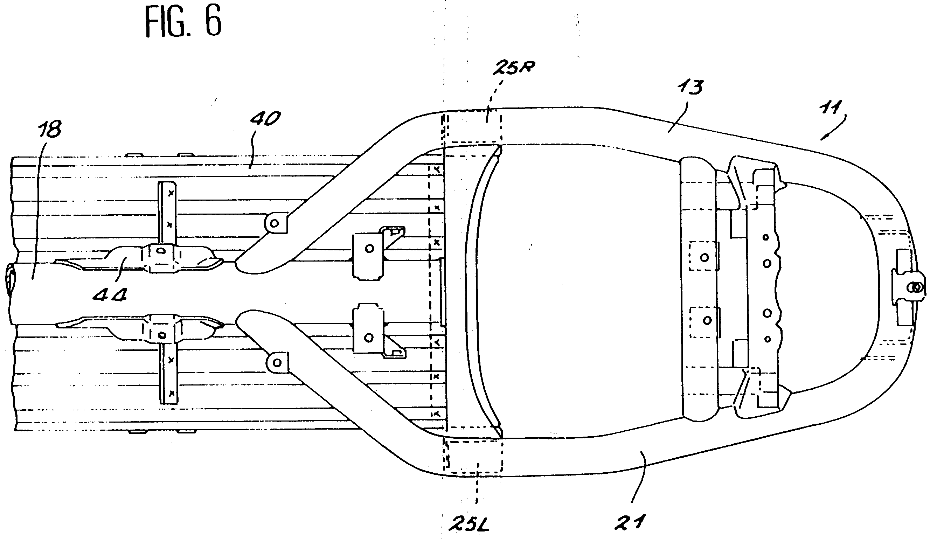

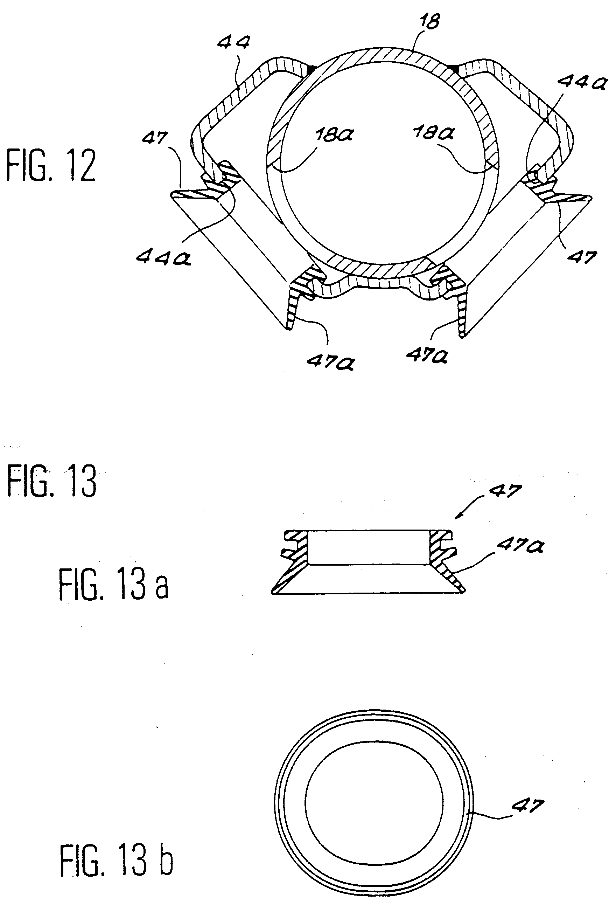

The intermediate frame 14 is provided with a center tube 18 in the form of a hollow pipe, which is bent upwardly toward its front end which is securely fixed to the head pipe 12 by welding or other suitable means. The center tube 18 is reinforced with a gusset 19 at its fixed fore end, and, as shown particularly in Figure 6, has the fore ends of the rear tube 21 of the rear frame 13 connected to its rear portions by welding or other suitable means. The center tube 18 is formed with communication ports 18a substantially at a center position in the longitudinal direction, Figure 12, and a bracket 44 is fixedly welded thereto in such a manner as to cover the communication ports 18a. The rear end of the center tube extends through the cross plate 30 and communicates with the rear duct 45.

As illustrated in Figures 5, 8 and 12, the bracket 44 is formed with four air exhaust holes 44a in total, namely, two air exhaust holes 44a in longitudinally spaced position on each lateral side thereof. Stem portion 44b are also provided on each lateral side. The bracket 44 has a hollow sucking disc member 47 fitted in each air exhaust hole 44a. A bolt is threadedly engageable in each stem portion 44b for fixing a fastening belt as will be described hereinafter. As shown in Figure 13, the sucking disc member 47 is formed of a resilient material like rubber and fitted on the bracket 44 with a conically diverging sucking disc 47a facing outwardly. The sucking disc 47a of each sucking disc member 47 is tightly fitted on marginal edges of an air exhaust hole of the battery box to communicate the same with the inner space of the center tube 18, namely, with the air exhauster 46 in a hermetically sealed state.

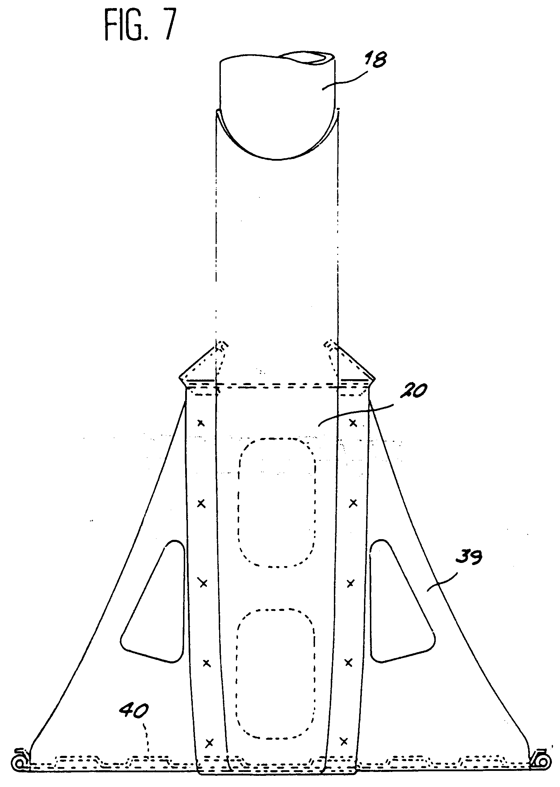

Further, as shown in Figures 5 and 7, a downwardly pendant bracket 20 is securely welded to a front portion of the center tube 18 at a position below the gusset 19, and a front plate 39 is securely fixed to the bracket 20 by spot welding or the like. The front plate 39 is formed substantially in a downwardly diverging triangular shape with the lower edge thereof folded backward. An under plate 40 is bridged between the folded lower edge of the front plate 39 and the afore-mentioned folded lower edge of the rear plate 31.

The under plate 40 includes a corrugated iron or steel sheet or the like, having three fastening belts 49F, 49C and 49 located in three spaced positions at each lateral side edge, and a couple of lids 48F and 48R (hereinafter indicated by the reference numeral alone without the suffix letter whenever necessary) which are movable between open and closed positions. Provided on the under plate 40 are a couple of partition plates 42F and 42R (hereinafter indicated by the reference numeral alone without the suffix letter whenever necessary) which are suspended from the center tube 18 in longitudinally spaced positions along the center of the under plate 40, and a center plate 43 which is also suspended from the center tube 18 at a longitudinal center position, see Figure 8.

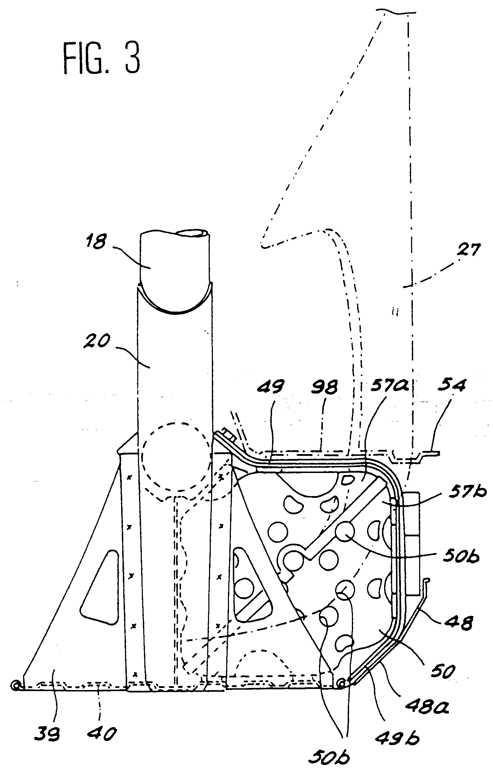

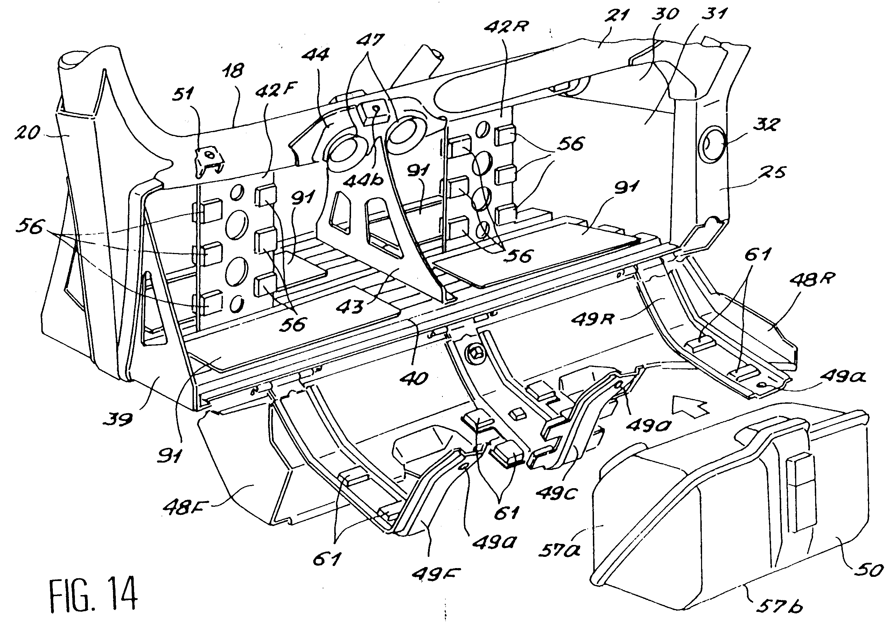

As seen in Figures 14 to 17, each fastening belt 49 is pivotally connected at its lower end to the outer side edge of the under plate 40 through a hinge, and formed with a mounting hole 49a at its upper end. As clear from Figures 3 and 11, these fastening belts 49 are each formed substantially in a U-shape on the inner side in a transversely sectioned profile, and provided with an upwardly inclined oblique portion 49b at the lower corner in a chamfered fashion.

At the time of mounting the battery box 50 which will be described hereinafter, the front fastening belt 49F is fixed by threading a bolt 52, in its mounting hole 49a, into a stopper member 51 which is fixed on the center tube 18. Similarly, the center fastening belt 49C is fixed by threading a bolt 52, in its mounting hole 49a, into the stem portion 44b of the bracket 44, and the rear fastening belt 49R is fixed to the center tube 18 through a stay 92. Thus, the battery box on the under plate 40 is fixedly held thereon by the fastening belts 49. The stay 92 is fixed at one end to the center tube 18 by a bolt 52, and fixed at the other end to the end of the fastening belt 49 by a bolt 52.

Rubber strips 61 are bonded on the inner surface of each fastening belt 49 for providing a cushioning effect on the contacting battery box 50.

The lids 48 are each positioned outwardly of the fastening belts 49 in the transverse direction of the vehicle body and pivotally supported on the under plate 40 by means of hinges provided at the lower edge thereof. Further, in adjacently located side edge portions, the lids 48 are provided with mounting holes 48b in vertically spaced positions. As shown in Figures 3 and 11, the lids 48 are each formed substantially in a U-shape on the inner side in a transversely sectioned profile, and provided with an oblique portion 48a at the lower corner thereof. Further, as shown in Figures 14 to 17, at the time of mounting the battery box 50, the lids 48 are also fixed by screws into the center fastening belt 49 through the mounting holes 48b.

The partition plates 42 each extend parallel with a vertical plane in the longitudinal direction, and are welded to the center tube 18 at the upper end and securely fixed on the surface of the under plate 40 at the lower end similarly by welding or other suitable means. The center plate 43 extends parallel with a vertical plane in the transverse direction of the vehicle body, and is welded to the center tube 18 at the upper end and fixed on the top surface of the under plate 40 at the lower end also by welding. The partition plates 42 and center plate 43 define four sections on the under plate 40, receiving a battery box 50 in each section to constitute a battery unit 99.

Rubber strips 56 are bonded on the partition plates 42, and rubber strips 91 are laid on the four sections of the under plate 40. The rubber strips 46 and 91 are interposed to cushion impacts which would otherwise be applied to the battery box 50.

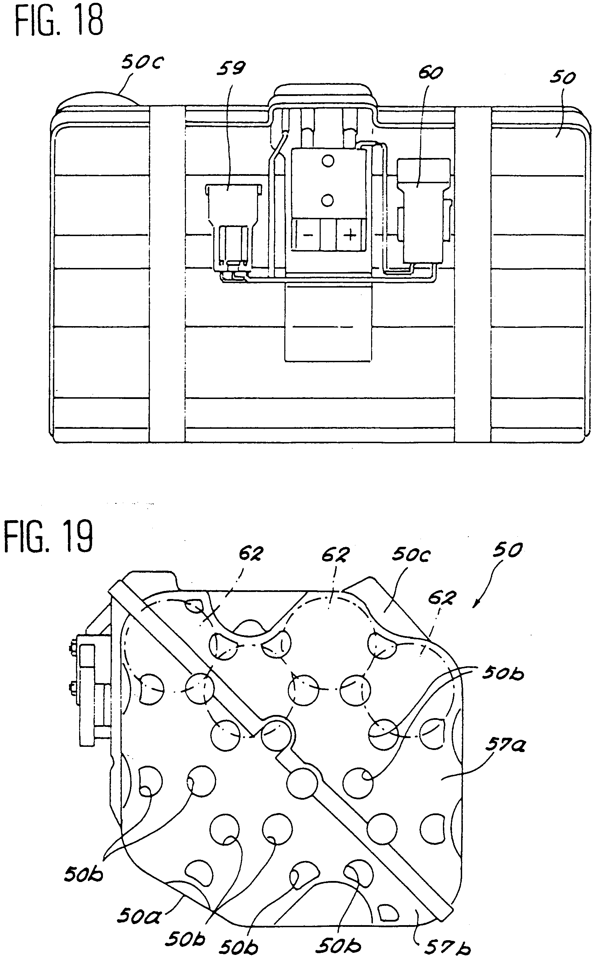

As shown particularly in Figures 18 and 19, the battery boxes 50 are arranged to accommodate a couple of battery assemblies 58 in front and rear positions, and each include inner and outer halves 57a and 57b of substantially triangular shape in front view, which are assembled together separably along a split plane inclined relative to a vertical line. Each battery box 50 is formed with an oblique portion 50a in conformity with the oblique portions 49b and 48a of the fastening belts 49 and lids 48, and with air exhaust ports 50c above the inner half 57a. A plural number of ventilation holes 50b are formed in the front and rear walls of the casing halves 57a and 57b. The air exhaust ports 50c are formed in positions confronting the above-described sucking disc members 47, and their marginal edges are brought into intimate contact with the latter when placed on the under plate 40 to establish communication with the center tube 18. The ventilation holes 50b are formed in positions corresponding to gap spaces 97, which exist between the individual batteries of the battery assembly 58 as will be described hereinafter, directing cooling air flows into the opposing gap spaces 97.

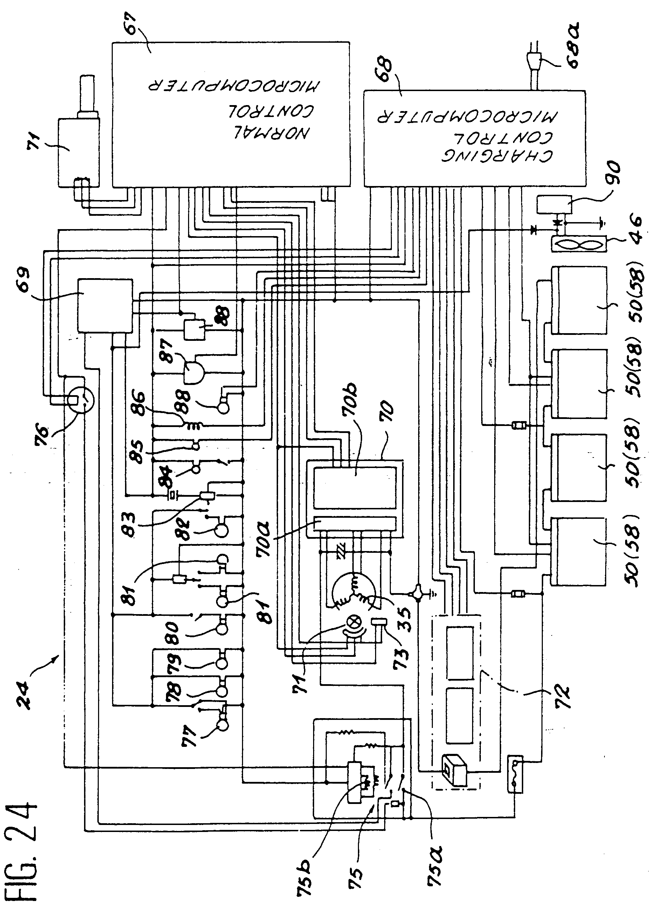

For connection to the corresponding battery assembly 58 each battery box 50 has a connector 59 mounted on an inner surface of the inner side wall in the transverse direction along with a fuse 60. The fuse 60 is connected electrically in series between the battery assembly 58 and the connector 59, while the connector 59 connects the coupled battery assembly 58 to a drive circuit. As described later, the battery assemblies 58 in the respective battery boxes 50 are connected in series with each other, see Figure 24.

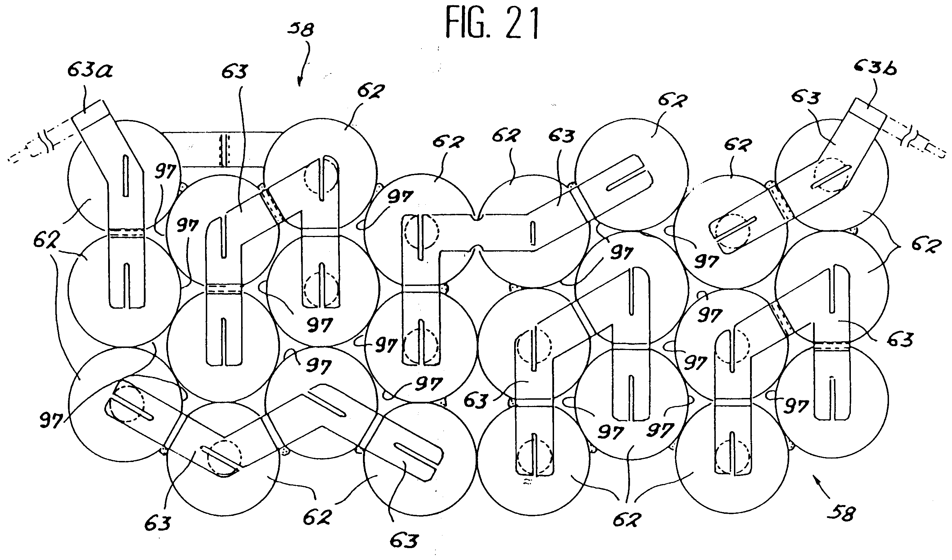

Each battery assembly 58 is composed of a plurality of elongated cylindrical batteries 62, twelve batteries in the particular embodiment shown, with electrodes at the opposite ends, which are bundled and bonded together by the use of an adhesive or the like in parallel relation with each other. With this battery assembly 58, gap spaces of substantially rhombic shape are formed between and along the adjacent batteries 62, the gap space 97 extending parallel in the longitudinal direction of the batteries 62, see Figures 21 to 23. The gap spaces 97 are respectively confronted by and communicated with the ventilation holes 50b of the battery box 50, and at the same time communicated with the air exhaust ports 50c.

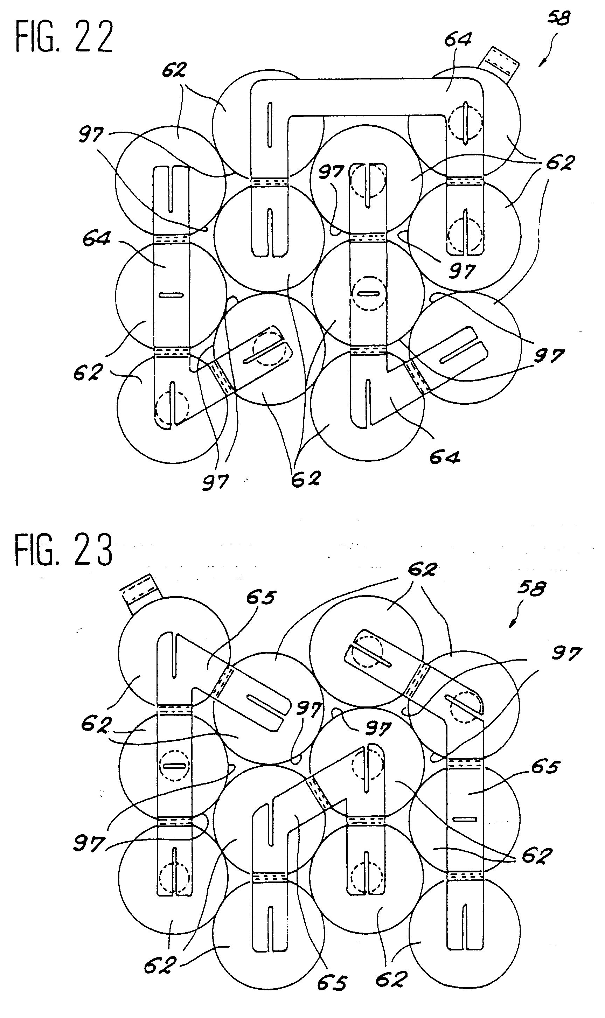

As described hereinbefore, a couple of battery assemblies 58 are accommodated as one set and separated in fore and rear sections within the battery box 50. A plurality of conductor plates 63 are securely fixed to the opposing electrodes to the two battery assemblies 58 in the battery box 50 as shown in a developed state in Figure 21, a plurality of conductor plates 64 are fixed to the fore electrodes of the battery assembly 50 in the fore position as shown in Figure 22, and a plurality of conductor plates 65 are fixed to the rear electrodes of the battery assembly 58 in the rear position as shown in Figure 23. By these conductor plates 63 to 65, the batteries 62 of the two battery assemblies 58 in the battery box 50 are divided into pairs which are connected in parallel with the other battery 62 of the same pair and in series with other battery pairs.

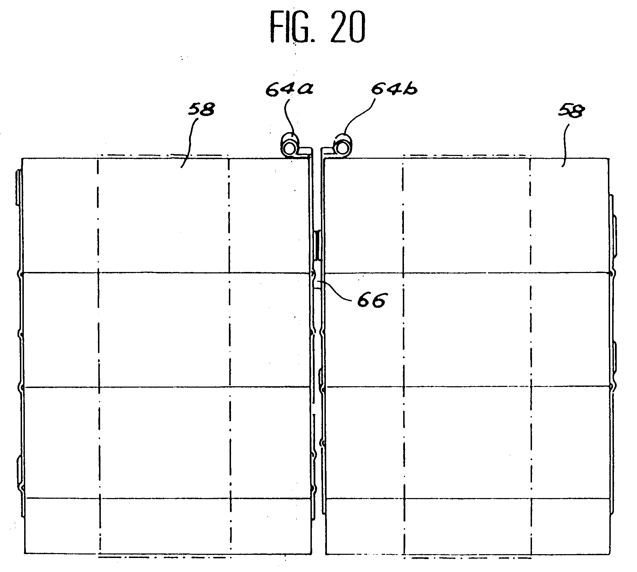

At the time of assembling the two battery assemblies 58 in the battery box 50, the conductor plates 63 are securely fixed to the electrodes of the battery assemblies 58 in a developed state, and then folded and sandwiches between the two battery assemblies 58 as shown in Figure 20. The conductor plates 63 are provided with terminals 63a and 63b at the opposite terminal ends, and a spacer 66 is interposed therebetween in the folded state. Terminals 64a and 65a are connected to the connector 59 in series with the fuse 60.

As shown in Figure 24, the controller 24 normally includes a normal control microcomputer 67, a charging control microcomputer 68, a down-regulator 69 and a drive circuit 70. The battery assemblies 58 in each battery box 50, which are connected in series, are connected to the drive circuit 70 through a power relay 75. The power relay 75 includes a normally closed four-contact two-position contactor 75a and a solenoid 75b. The contactor 75a of this power relay 75 is inserted between the respective battery assemblies 58 and the electric motor 35 and between the down-regulator 69 and the respective battery assemblies 58, and driven by the solenoid 75b according to the output of the normal control microcomputer 67.

Connected to the first output terminal of the down-regulator 69 are a fan drive motor for the above-described air exhauster 46, a head light 77, a tail light 78, a meter light 79, a small lamp 80, left and right winker lamps 81 and a horn 82, and connected to the second output terminal of constant voltage are a communication horn 83, a pilot lamp 84, a battery charging alarm lamp 85, a battery level meter 86, a kill sensor 87, an indicator lamp 88 and the normal control microcomputer 67. The down-regulator 69 supplies electric power to the fan drive motor for the air exhauster 46, normal control microcomputer 67 and lamps, etc.

The fan drive motor for the air exhauster 46 constantly receives power supply when the contactor 75a of the power relay 75 is opened. The communication horn 83 is actuated, for example, during a cruising operation to notify a pedestrian of the existence of the vehicle. The kill sensor 87 supplies the normal control microcomputer 67 with a command signal to cut off the power supply system in the event the vehicle falls down or in view of a similar accident. The indicator lamp 88 indicates normal or abnormal conditions when the vehicle is in motion or at rest by turning on and off four lamps in different combinations.

The drive circuit 70 includes a main driver 70a in the form of a bridged FET circuit or the like, and a predriver 70b including a gate driver circuit or the like. The main driver 70a is connected to the afore-mentioned electric motor 35, and the predriver 70b is connected to the normal control microcomputer 67. The driver circuit 70 produces a current corresponding to a duty factor from the battery assemblies 58 on the basis of a PWM signal produced by the normal control microcomputer 67.

Connected to the normal control microcomputer 67 are a throttle sensor 71 serving to detect the rotational angle of the accelerator grip of the steering handle 17, a current sensor 72 serving to detect the conduction current to the electric motor, and a temperature sensor 73 serving to detect the temperature of the electric motor 35, along with a main switch 76, a solenoid 75b of the above-described power relay 75 and the drive circuit 70. The normal control microcomputer 67 is arranged to produce a PWM signal for supply to the drive circuit 70 on the basis of the output signals of the respective sensors, thereby controlling the electric motor 35 for the control of vehicle speed in a normal cruising operation or for charging the batteries 62 in a braking operation through regenerative brake control.

The charging control microcomputer 68 is provided with a connector 68a for connecting to a supply of electricity, and operated on the main power supply. The charging control microcomputer 68 has a charging terminal which is connected to the respective battery assemblies 58, and an air exhauster drive terminal which is connected to an AC/DC converter 90, along with constant voltage terminals for the afore-mentioned main switch 76 and down-regulator 69 and terminals which are connected to the battery level meter 68, battery charging alarm lamp 85, current sensor 72, and battery temperature sensor 89 serving to detect the temperature of the batteries 62. The AC/DC converter 90 is connected to the fan drive motor for the air exhauster 46 to supply current after converting mains AC current into DC current. When the connector 68a is connected to a mains tap with the main switch 76 in a nontravelling position such as a charging position, the charging control microcomputer 68 starts to control the charging of the battery assemblies 58 on the basis of output signals of the respective sensors including the current sensor 72.

The above-described embodiment operates in the manner as described below.

In case of the electric motor scooter of this embodiment, the battery unit 99 is supported in a suspended state under the center tube 18, supplying current from the battery unit 99 to the electric motor 35. In a normal vehicle driving operation, the current supply to the electric motor 35 is controlled by the normal control microcomputer 67 for the control of the vehicle drive or regenerative braking, and at the time of charging, the respective battery assemblies 58 are charged with the current from the mains source under control of the charging control microcomputer 68.

In this particular electric motor scooter, the duct 36 is connected to the power swing unit 33 to take in and send cooling air to the electric motor 35 through the duct 36 in a cruising operation for cooling the motor. In this regard, the magnet 37 is fixed on the inner surface of the duct 36 to catch iron powder which might be entrained in the cooling air flows. This prevents magnetic dust like iron powder from creeping into the electric motor 35 to cause deteriorations in performance quality of the electric motor 35.

Further, in this electric motor scooter, the battery unit 99 accommodates a couple of battery assemblies 58 in each one of the four battery boxes 50 placed on the under plate 40 which is suspendedly supported on the center tube 18, the battery unit 99 having an elongated shape in the longitudinal direction of the vehicle. Namely, the battery assemblies 58 of the battery unit 99 are each formed in an elongated shape as a whole, and placed in longitudinally fore and rear positions, so that the battery unit 99 has a greater degree of freedom in shape designing in the widthwise direction. Therefore, even though the battery unit 99 is suspended under the center tube 18, its width can be reduced to such a degree as to guarantee a large bank angle. The battery unit 99 is suspended in position through utilization of the dead space under the step floor, so that it contributes to lower the center of gravity of the vehicle as a whole in addition to the effective use of the dead space.

Especially, the battery unit 99 is constituted by the battery assemblies 58 which are formed by bundling a number of batteries of elongated shape extending in the longitudinal direction of the vehicle. Therefore, each battery assembly 58 has a great degree of freedom in widthwise shape design, giving a greater degree of freedom in the shape design of the battery unit 99 as a whole. The battery assemblies 58 include batteries 62 which are bundled substantially in a trapezoidal shape in cross section with truncated portions on the opposite lateral sides, correspondingly providing the oblique portion 50a in the lower portion of its outer lateral side, the oblique portion 48a on the lid and the oblique portion 49b on the fastening belts 49 to permit a larger bank angle.

Each pair of battery assemblies 58 to be accommodated in a battery box 50 are assembled together by fixing the electrodes of the batteries 62 of the respective battery assemblies 58 to the conductor plates 63 in developed state and then folding the conductor plates 63 in such a manner as to bring the respective electrodes into head-to-head relation. Therefore, the battery assembling process can be simplified and can be completed through a reduced number of steps.

The battery assemblies 58 which are accommodated in the battery box 50 have gap spaces 97 between the individual batteries 62 in communication with the ventilation holes 50b and air exhaust ports 50c in the fore and rear walls of the battery box 50. The gap spaces 97 are in communication with the air exhauster 46 through the air exhaust ports 50c and center tube 18. In an ordinary cruising operation, the air exhauster 46 is controlled and driven from the normal control microcomputer 67 to cool the batteries 62. In a charging operation, it is controlled and driven from the charging control microcomputer 68 to cool the batteries 62. Therefore, temperature elevation of the batteries 62 is prevented to preclude occurrence of problems which would be caused by temperature increases of the batteries 62.

In this instance, the electric motor scooter utilizes the center tube 18 as a duct for discharging air from the battery box 50. Therefore, there is no need for providing a duct exclusively for this purpose, and it becomes possible to reduce the number of parts to attain reductions in size and weight of the vehicle body as a whole. Further, since the discharge port of the air exhauster 46 is opened into a space which is covered under the rear cover 27, the air exhauster 46 and batteries 62 are suitably protected against intrusion of water or other foreign matter without providing a cover specifically for prevention of intrusion of such water or other undesirable extraneous material. This also contributes to reduce the number of parts and the weight of the vehicle.

On the other hand, the batteries are loaded and unloaded to and from the electric motor scooter in the manner as shown in Figures 14 through 17. Firstly, the lids 48 and fastening belts 49 are opened as seen in Figure 14, while in this state the battery assemblies 58 are put in a battery box 50 and placed on the under plate 40. Similarly, the remaining three battery boxes 50 are placed on the under plate 58 so that in total four battery boxes 50 are loaded on the under plate 40.

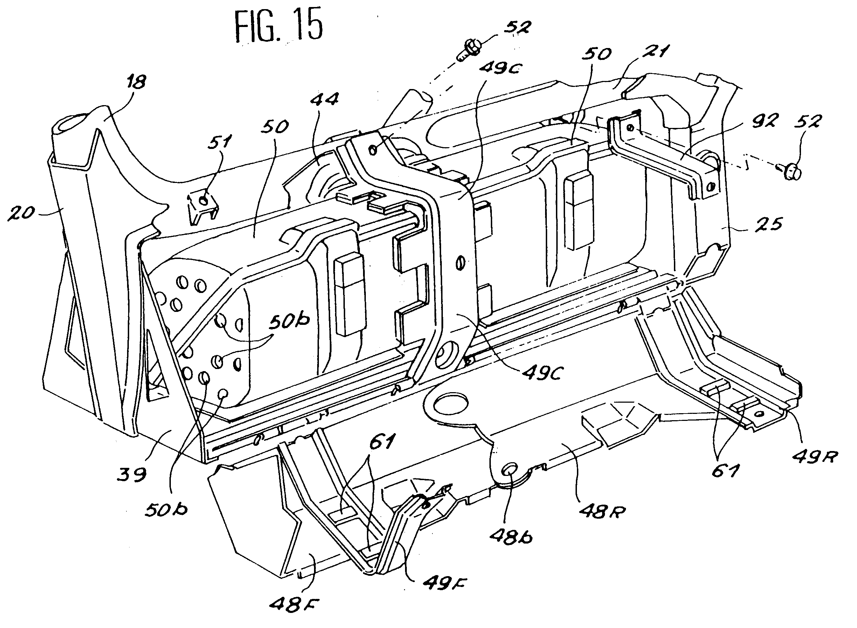

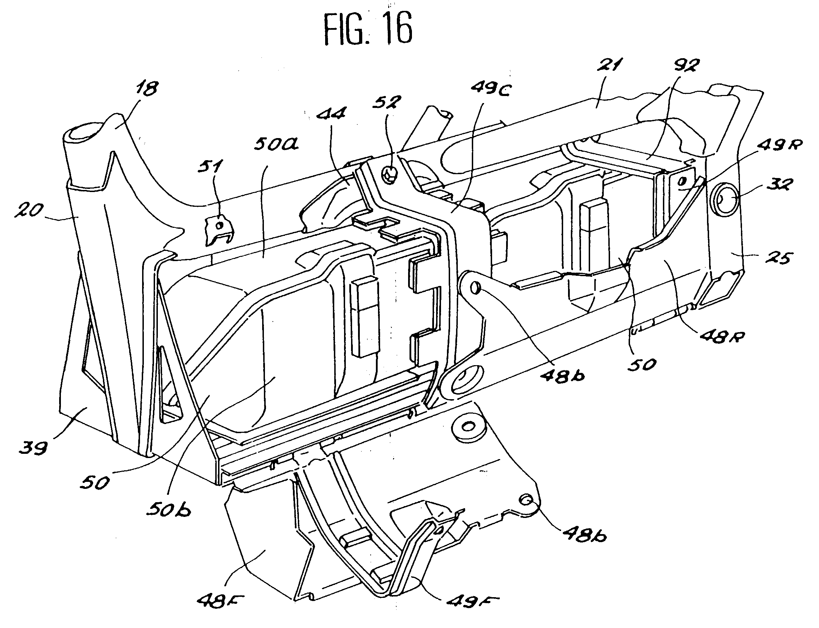

As illustrated in Figure 15, the upper end of the center belt 49c on one side of the vehicle is fixed to the center tube 18 by a bolt 52, and one end of the fixing member 93 is fixed to the center tube 18 by a bolt 52. Similarly, the other fastening belt 49c and fixing member 93 on the other side are fixed to the center tube 18. Thereafter, as shown in Figure 16, the lid 48 on the rear side is closed and fixed in the closed position by means of a screw 53, and the lid 48 on the other side is fixed in the closed position in a similar manner.

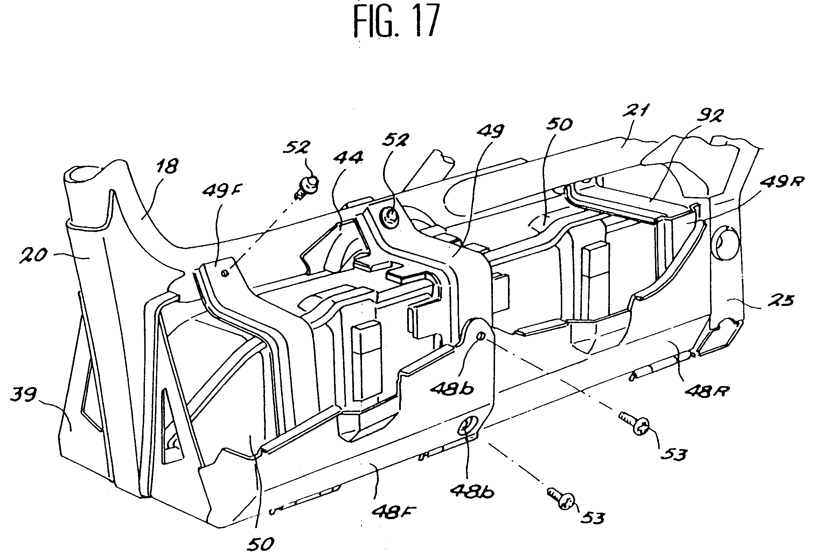

As illustrated in Figure 17, the upper end of the fastening belt 49 on the front side is fixed to the center tube 18 by a bolt, and then the lid 48 on the front side is closed and fixed in that position at two positions by means of screws 53 to complete the battery loading. The battery can be unloaded from the vehicle by reversing the order of the above-described battery loading procedures, namely, by performing the jobs of Figures 17, 16, 15 and 14 in a reversed way.

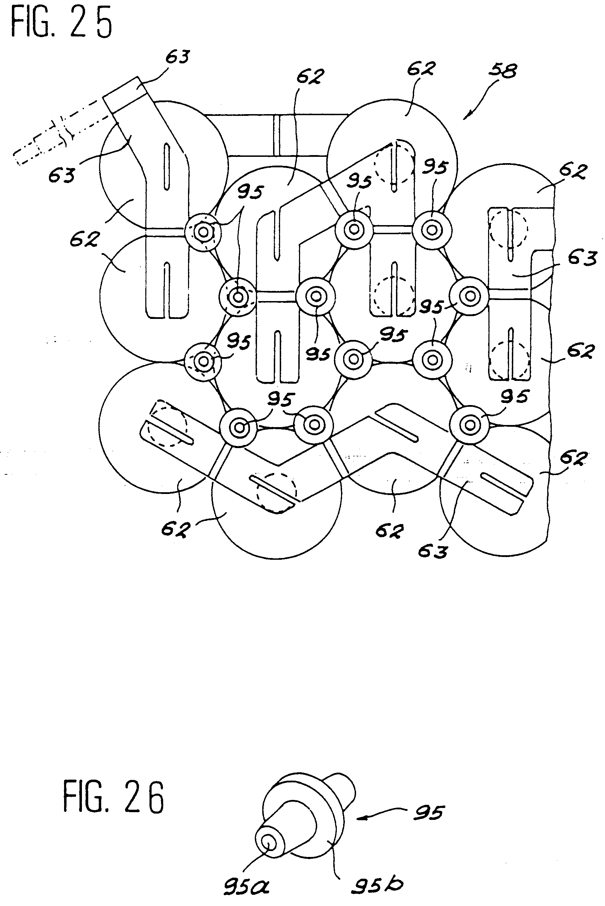

Figures 25 and 26 illustrate another embodiment of the invention, of which Figure 25 is an enlarged fragmentary front view of a battery assembly and Figure 26 is a perspective view of a part used for the battery assembly.

In this embodiment, the component parts common with the foregoing embodiment are designated by common reference numerals, and their description is omitted to avoid repetitions.

As illustrated in Figure 25, bushings 95 are fitted in the gap spaces 97 between the individual batteries 62 at each end face of the battery assembly 58. Each one of the bushes 95 is formed in a hollow shape having an axial bore 95a and provided with a flange 95b around the circumference of its body. These bushings 95 are bonded to the batteries 62 at their circumferential surfaces and flanges 95b by the use of an adhesive or other suitable means. The axial bores 95a open into the gap spaces 97 to introduce air thereinto.

In this embodiment, the batteries 62 are joined together more firmly through the bushings 95 to improve the strength of the battery assembly 58. Cooling air for the batteries 62 is introduced into the respective gap spaces 97 through the axial bores 95a of the bushings 95 without degrading the cooling effect on the batteries 62.

Although the invention is applied to a straddling type electric motor vehicle in the foregoing embodiments, it can be similarly applied to electric motor vehicles other than the straddling type, for example, to four-wheel electric motor vehicles.

The battery unit is formed in an elongated shape and located under the vehicle body to extend in the longitudinal direction of the vehicle body. This arrangement gives a great degree of freedom in selecting the widthwise profile of the battery, in addition to an advantage that the width can be reduced to secure a large bank angle when applied to a straddling type electric motor vehicle.

The battery unit is constituted by battery assemblies each consisting of a bundle of a plurality of batteries of an elongated shape. This arrangement also gives a broader range of freedom in selecting the battery shape.

The battery unit is formed in a shape having lower edges of the opposite lateral sides thereof truncated to have a smaller width across the bottom side than across the top side thereof. This arrangement contributes to secure a large bank angle when applied to a straddling type vehicle.

The battery unit is suspended under an intermediate vehicle body interconnecting a front vehicle body and a rear vehicle body, providing a step floor on the upper side of the intermediate vehicle body over the battery unit. This arrangement contributes to lower the center of gravity of the vehicle as a whole, while utilizing a dead space in such a manner as to provide a compact vehicle body.

A battery assembly is formed by bundling together a plural number of elongated batteries to extend in the longitudinal direction of the motor vehicle and in small gap relation with adjacent batteries, and accommodated in a ventilated battery box. Thus, the battery is cooled with air to prevent elevations of its temperature.

The battery unit is provided with an air exhauster for forced air exhaustion to cool the battery more effectively.

The battery unit is arranged to exhaust air through a hollow frame member. This arrangement obviates the necessity for providing a duct exclusively for this purpose, and permits reduction in the number of parts and the size of the vehicle body.

The air exhauster is located in a space enclosed by a body cover and the discharge port of the air exhauster is opened into that space. This arrangement can prevent intrusion of rain water into the air exhaust cylinder without the necessity of providing special parts for this purpose and permitting to reduction in the number of component parts and reduction in the size of the vehicle body.

A couple of battery assemblies, each composed of a plural number of batteries, are connected to flat conductor plates in such a way that the battery assemblies are connected end to end upon folding the conductor plates. This arrangement facilitates the assembling process and contributes to reduce the number of steps of assembling.

A magnet is located on an inner wall surface of the duct which introduces cooling air streams toward the electric motor. This arrangement contributes to prevent magnetic dust like iron powder from creeping into the electric motor, and thus to guarantee high reliability of the motor.

Described below are further embodiments employing an arrangement which permits to mount or dismantle the battery 15 from or in the sideward direction of the vehicle body, and wherein the component parts common with the foregoing embodiment in function are designated by common reference numerals.

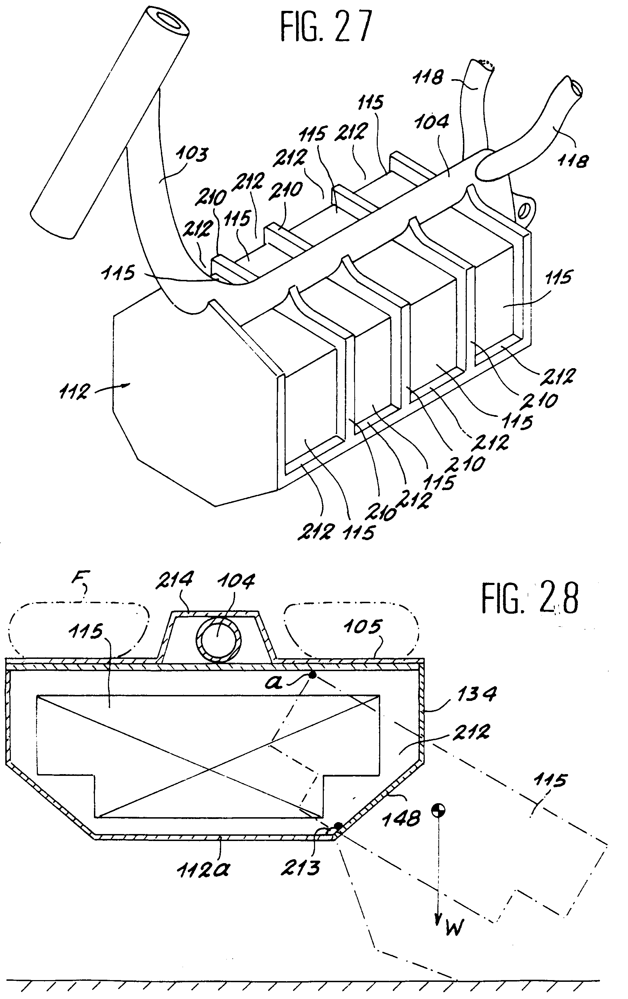

In all of these embodiments, the longitudinal side of the battery 15 is disposed in the transverse direction of the battery case 12 (or in the transverse direction of the vehicle body) in mounting and dismantling same. Referring to Figure 27 which illustrates another embodiment of the invention, the floor frame 104 is connected to a lower portion of the main frame 103, and the center portion of the vehicle body includes a single, longitudinally extending pipe frame with a couple of rear frames 118 connected to rear portions thereof.

The battery case 112 is securely fixed to the floor frame 104 along the center of its top side, and provided with a plural number of partition plates 210 transversely of the vehicle body or in a direction perpendicular to the floor frame 104, the partition plates 210 defining therebetween a plural number of battery compartments 211 which extend fully from one side to the other in the transverse direction of the vehicle body. Each one of the battery compartments 211 is provided with an inlet 212 which is opened toward one lateral side of the vehicle body. The battery 215 may be of either a multi-cell type as employed in the foregoing embodiment or a singular cell type.

With the above-described arrangement, the floor frame 104 does not exist sideward of the battery case 112, so that it becomes possible to mount or dismantle the battery 115 from or in the sideward direction of the vehicle body. This is advantageous particularly in a case where it is difficult to lift the battery 115 up and down due to its heavy weight. The provision of the partition plates 210 contributes to increase the strength against impacts which might be applied from beneath. Further, the floor frame 104 which includes a single pipe permits reduction in the width of the step floor 105 for the sake of slim vehicle body or for ensuring better footing for the driver.

In addition to the arrangements of Figure 27, another embodiment which is shown in Figure 28 has the side wall 134 swingably connected through a hinge 213 to serve as a lid member for opening and closing the inlet 212. The battery 115, which is the multiple-cell type as in the foregoing embodiments, is mounted in position with its longer side in the transverse direction of the vehicle body, and has a number of cells removed from the opposite sides of its bottom portion to present a profile conforming with the sectional shape of the battery case 112 with oblique wall portions 148 at the opposite sides thereof. The step floor 105 is centrally formed with an upwardly projecting portion 214 for accommodating the floor frame 104. The existence of the upwardly projecting portion 214 gives rise to no problem because the driver's fee F are put on the opposite sides of the upwardly projecting portion 214 as shown in the drawing.

With the above arrangement, the battery 115 can be extracted in the sideward direction of the vehicle body after opening the side wall 134. In so doing, the outer end of the battery 115 which has been extracted from the battery case 12 tends to turn downwardly due to its weight, so that the battery 115 can be extracted gradually in a downwardly inclined posture, without the possibility of slipping off the battery case 112 because the inner upper corner portion a and the bottom of the battery 115 are alternately abutted against the lower side of the step floor 105 and an edge b of the opening at the outer end of the bottom wall 112a, respectively.

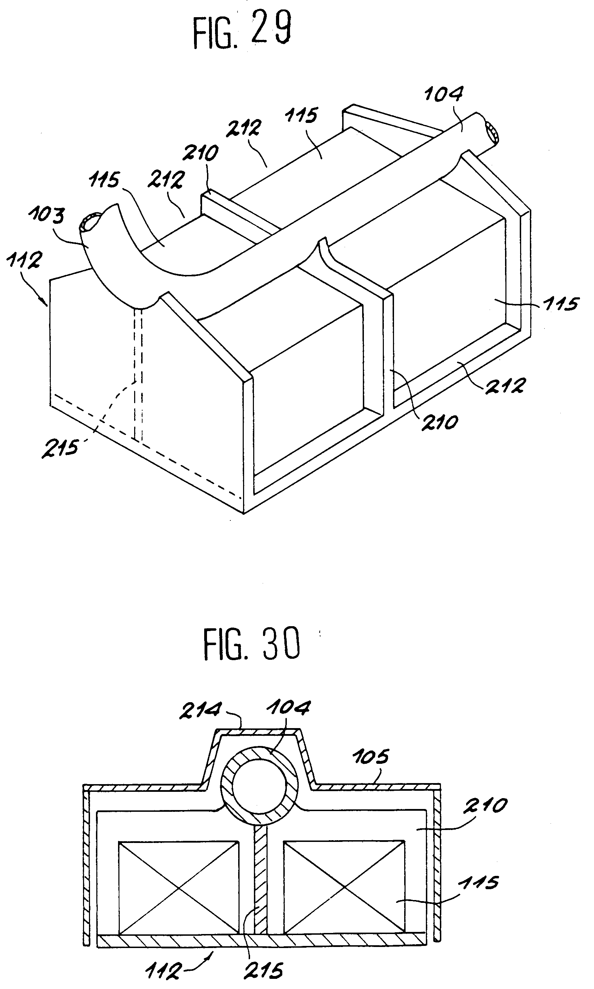

Illustrated in Figures 29 and 30 is another embodiment of the invention, which is basically the same as the first embodiment of Figure 27 except that the battery case 112 is almost cut into 1/2 in length in the longitudinal direction and transverse battery compartments are provided separately on each side of the battery case 112. In this case, the battery case 12 is internally provided with a partition plate 215 along the center thereof. Figure 30 shows the step floor 105 in addition to the transverse sectional view of Figure 29.

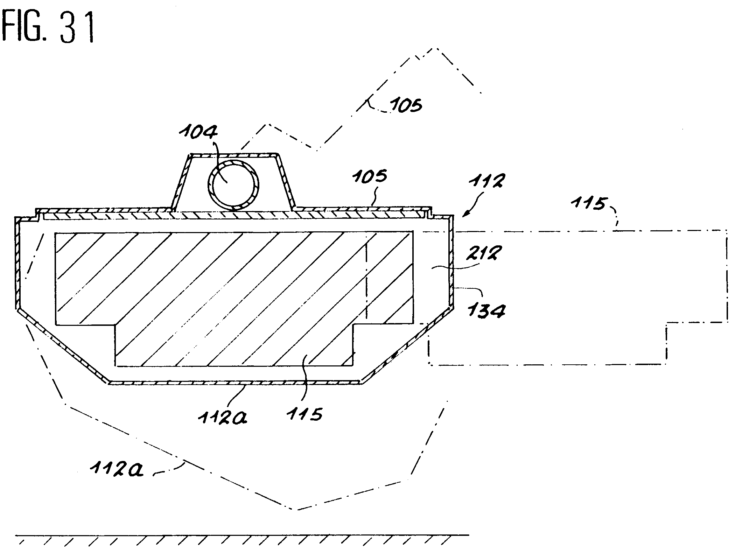

Illustrated in Figures 31 through 37 are further embodiments employing a guide means for loading or unloading the battery 115 into and out of the battery case 112. More specifically, Figure 31 shows another embodiment which is similar to the embodiment of Figure 28 except that the step floor 105 as well as the side wall 134 and bottom wall 112a are swingably connected to serve as lid members. The battery 115 is movable horizontally in the sideward direction of the vehicle body by the use of a guide means which is not shown.

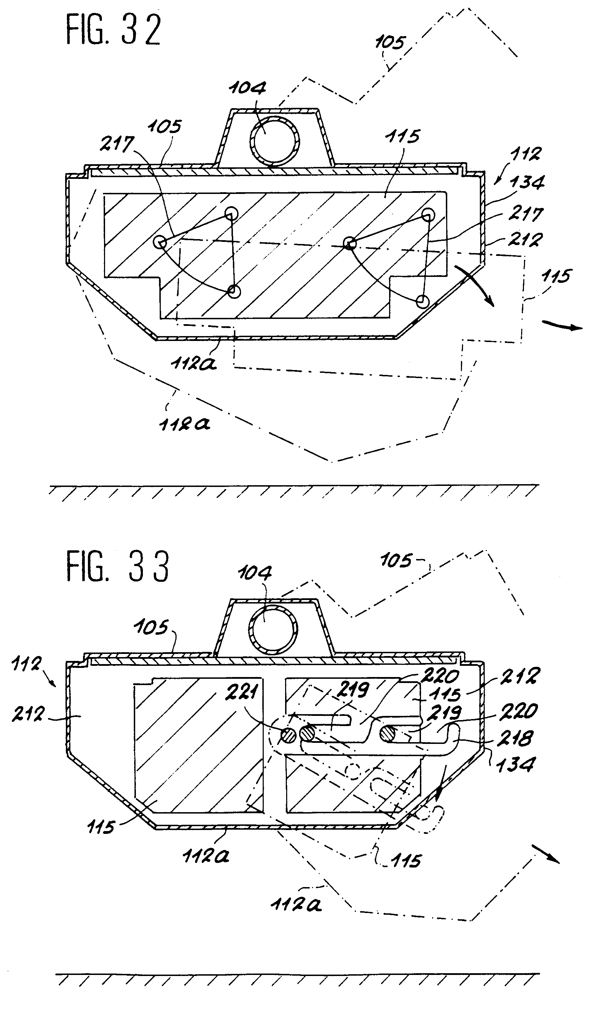

Figure 32 illustrates another embodiment employing an arrangement in which the step floor 105 as well as the side wall 134 and bottom wall 112a are openable, in combination with a guide means which is adapted to get the battery 115 out of the battery case 112 through parallel links 217 of uniform lengths while gradually lowering the outer end.

Figure 33 illustrates another embodiment employing an arrangement in which the step floor 105 and the bottom wall 112a are openable in halves on the opposite sides of the floor frame 104 together with the associated side wall 134 (only the right side being opened in Figure 33). On each side the battery 115 is guided by a slide member 218 which is pivotally supported at one end thereof. The slide member 218 is provided with a couple of guide grooves 219 to support the battery 215 at two positions on the side wall thereof. Accordingly, when extracting the battery 115 from the battery case 112, initially it is moved in the horizontal direction along the slide member 218, which is supported in a horizontal state, as far as an open mouth 220 at the outer end of the slide member 218. In this state, the slide member 218 is turned downward about a pivoting point 221, and at the same time the battery 115 is outwardly turned downward at an angle of about 45° so that it can be removed in the sideward direction.

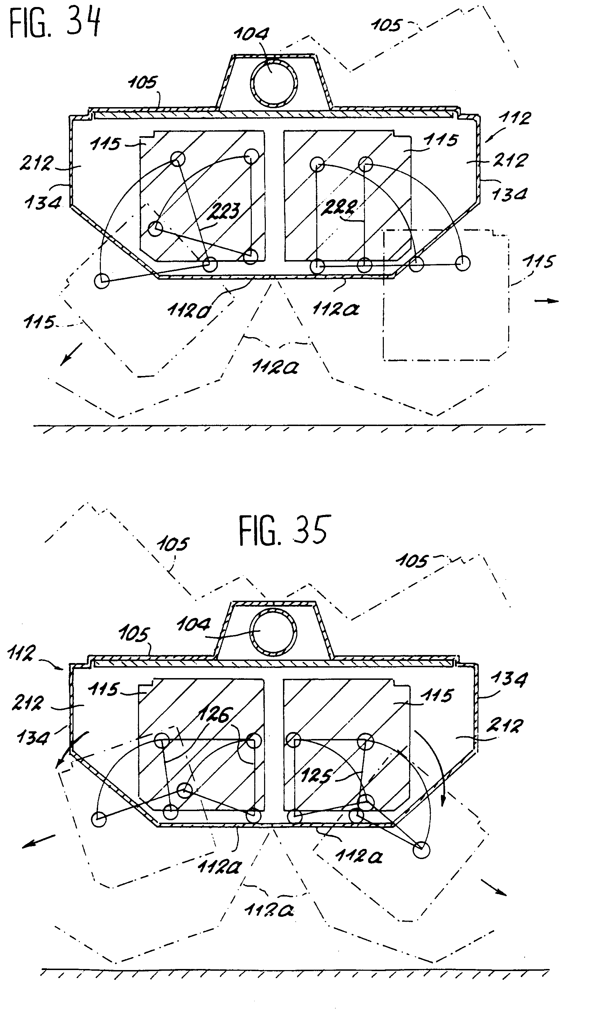

Figure 34 illustrates another embodiment employing an arrangement in which the battery 115 can be turned to a greater degree as compared with the arrangement of Figure 32, more specifically, through an angle of about 90°. The battery 115 on the right side can be turned through an angle of about 90° by the use of links 122 of uniform lengths, while the battery on the left side can be turned through more than approximately 90° by the use of trapezoidal links of different lengths. Either type of links can be selectively adopted depending upon the need.

Figure 35 illustrates another embodiment employing another link arrangement using trapezoidal links 225 and 226 of different lengths. Either one of these links permits to extract the battery in a posture which is inclined downward in the outward direction, and to set the angle of inclination arbitrarily by changing the combination of link members.

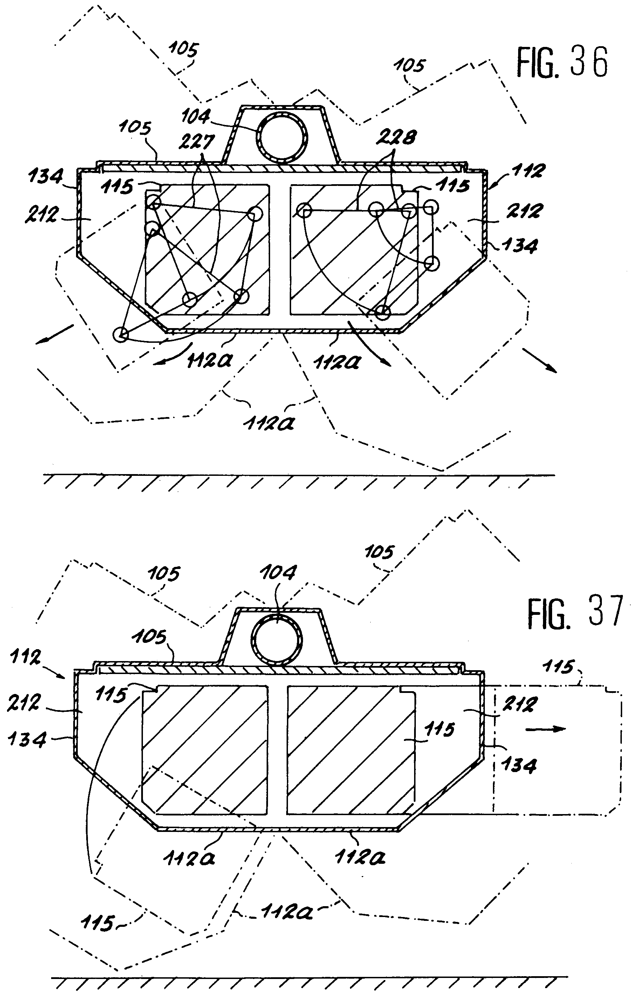

Figure 36 illustrates another embodiment employing a pair of link members 227 and 228 of different lengths, which have the respective pivoting points in an upper outer portion of the battery 115. Consequently, the battery 115 can be extracted in an obliquely raised state.

Figure 37 illustrates another embodiment employing different guide systems for the batteries 115 on the left and right battery cases. In an unloading operation, the battery 115 on the left side is turned downward in the outward direction together with the side wall 134. Of course, it is possible to combine different guide systems of different movements arbitrarily by the use of the guides means described hereinbefore or other guide means.

## Claims

1. A battery unit in an electrically powered vehicle including a vehicle body (11) :
- said battery unit (99) being operatively connected to said vehicle body (11) for supplying electricity to said electrically powered vehicle ;
- said battery unit (99) being of an elongated shape in outer configuration with the length direction extending along the longitudinal direction of said vehicle body (11) ;
- said battery unit (99) including a plurality of battery assemblies (58), each accomodated in a battery box (50), each battery assembly (58) including a plurality of individual batteries (62) ;
characterized in that
- said battery unit (99) is located under said vehicle body (11) and mounted below a step floor (98) ;
- said individual batteries (62) are elongated cylindrical batteries extending in the longitudinal direction of said vehicle body (11) and arranged such that cooling gap spaces (97) are formed between said individual batteries ;
- introduction holes (50b) are provided in each battery box (50) for introducing cool air at positions corresponding to the cooling gap spaces (97) formed between said individual batteries (62) ;
- at least one exhaust hole (50c) is formed in at least an upper wall of each battery box (50); and
- a center tube (18) extends longitudinally along a center of the vehicle body (11) and forms a passageway for cool air inside, each battery box (50) being located at a lower side of said center tube (18) and said center tube (18) being connected to fan means (46) for cooling said battery unit (99) through said introduction and exhaust holes (50b,50c).

2. A battery unit according to claim 1, wherein said vehicle body (11) includes a front frame (12) for supporting a front wheel (16F), a rear frame (13) for supporting a rear wheel (16R) and an intermediate frame (14) interconnecting said front and rear frames, said battery unit (99) being suspended under said intermediate frame (14) and providing a foot rest on an upper surface thereof extending along said intermediate frame (14).

3. A battery unit according to either claim 1 or 2, wherein said battery unit (99) is supported on said center tube (18) of said electrically powered vehicle, the latter being of the straddling type.

4. A battery unit according to any of claims 1 to 3, wherein said electrically powered vehicle being of the straddling type, and the vehicle body having a cowl (55,54,27), said exhaust hole (50c) is in communication with an inner space of said cowl, for exhausting air therein.

5. A battery unit according to any of claims 1 to 4, and further including a cooling air duct (36) and a magnet (37) operatively mounted on an inner wall of said cooling air duct, for attracting particles passing therethrough.

6. A battery unit according to claim 1, wherein said fan means (46), supply cool air to said battery box (50), and are connected to a side of a main frame of said electrically powered vehicle.

7. A battery unit according to claim 1, wherein said fan means (46) communicate with said introduction holes (50b) for forcibly exhausting air from each battery box (50).

## Patentansprüche

1. Batterieeinheit in einem elektrisch angetriebenen Fahrzeug, das eine Fahrzeugkarosserie (11) enthält, wobei:
- die Batterieeinheit (99) funktionell mit der Fahrzeugkarosserie (11) verbunden ist, um dem elektrisch angetriebenen Fahrzeug Elektroenergie zuzuführen;
- die Batterieeinheit (99) eine längliche äußere Form hat, wobei sich die Längenrichtung in der Längsrichtung der Fahrzeugkarosserie (11) erstreckt;
- die Batterieeinheit (99) eine Vielzahl von Batteriebaugruppen (58) enthält, die jeweils in einem Batteriebehälter (50) untergebracht sind, wobei jede Batteriebaugruppe (58) eine Vielzahl einzelner Batterien (62) enthält;
**dadurch gekennzeichnet, daß**:
- sich die Batterieeinheit (99) unter der Fahrzeugkarosserie (11) befindet und unterhalb eines Trittbretts (98) angebracht ist;
- die einzelnen Batterien (62) längliche zylindrische Batterien sind, die sich in der Längsrichtung der Fahrzeugkarosserie (11) erstrecken und so angeordnet sind, daß Kühlzwischenräume (97) zwischen den einzelnen Batterien ausgebildet sind;
- Einlaßlöcher (50b) in jedem Batteriebehälter (50) vorhanden sind, um kühle Luft an Stellen einzulassen, die den Kühlzwischenräumen (97) entsprechen, die zwischen den einzelnen Batterien (62) ausgebildet sind;
- wenigstens ein Austrittsloch (50c) in wenigstens einer oberen Wand jedes Batteriebehälters (50) ausgebildet ist; und
- ein Mittelrohr (18) in Längsrichtung entlang einer Mitte der Fahrzeugkarosserie (11) verläuft und einen Kanal für kühle Luft im Inneren bildet, wobei jeder Batteriebehälter (50) an einer Unterseite des Mittelrohrs (18) angeordnet ist und das Mittelrohr (18) mit einer Gebläseeinrichtung (46) verbunden ist, um die Batterieeinheit (99) über die Einlaß- und Auslaßlocher (50b, 50c) zu kühlen.

2. Batterieeinheit nach Anspruch 1, wobei die Fahrzeugkarosserie (11) einen vorderen Rahmen (12), der ein Vorderrad (16F) trägt, einen hinteren Rahmen (13), der ein Hinterrad (16R) trägt, und einen Zwischenrahmen (14) enthält, der den vorderen und den hinteren Rahmen miteinander verbindet, wobei die Batterieeinheit (99) unter dem Zwischenrahmen (14) aufgehängt ist und eine Fußauflage an einer Oberseite derselben bildet, die sich an dem Zwischenrahmen (14) entlang erstreckt.

3. Batterieeinheit nach Anspruch 1 oder 2, wobei die Batterieeinheit (99) vom Mittelrohr (18) des elektrisch angetriebenen Fahrzeugs getragen wird, wobei letzteres vom überspannenden Typ ist.

4. Batterieeinheit nach einem der Ansprüche 1 bis 3, wobei das elektrisch angetriebene Fahrzeug vom überspannenden Typ ist und die Fahrzeugkarosserie eine Verkleidung (55, 54, 27) hat, wobei das Auslaßloch (50c) mit einem Innenraum der Verkleidung in Verbindung steht, um Luft darin auszulassen.

5. Batterieeinheit nach einem der Ansprüche 1 bis 4, die des weiteren einen Kühlluftkanal (36) und einen Magneten (37) enthält, der funktionell an einer Innenwand des Kühlluftkanals angebracht ist, um durch ihn hindurchtretende Teilchen anzuziehen.

6. Batterieeinheit nach Anspruch 1, wobei die Gebläseeinrichtung (46) dem Batteriebehälter (50) kühle Luft zuführt und an einer Seite eines Hauptrahmens des elektrisch angetriebenen Fahrzeugs angebracht ist.

7. Batterieeinheit nach Anspruch 1, wobei die Gebläseeinrichtung (46) mit den Einlaßlöchern (50b) in Verbindung steht, um Luft aus jedem Batteriebehälter (50) unter Druck auszulassen.

## Revendications

1. Unité de batterie dans un véhicule alimenté en énergie électrique comprenant un corps de véhicule (11) :
- ladite unité de batterie (99) étant reliée fonctionnellement audit corps de véhicule (11) pour alimenter en électricité ledit véhicule alimenté en énergie électrique ;
- ladite unité de batterie (99) ayant une conformation extérieure de forme allongée dont la direction selon la longueur s*'*étend le long de la direction longitudinale dudit corps de véhicule (11) ;
- ladite unité de batterie (99) comprenant une pluralité d'ensembles de batteries (58), chacun logé dans un boîtier de batterie (50), chaque ensemble de batterie (58) comprenant une pluralité de batteries individuelles (62) ;
caractérisée en ce que
- ladite unité de batterie (99) est située sous ledit corps de véhicule (11) et est montée au-dessous d*'*un plancher (98) ;
- lesdites batteries individuelles (62) sont des batteries cylindriques allongées s*'*étendant dans la direction longitudinale dudit corps de véhicule (11) et sont agencées de sorte que des espaces d*'*écartement de refroidissement (97) sont formés entre lesdites batteries individuelles ;
- des orifices d'introduction (50b) sont disposés dans chaque boîtier de batterie (50) pour introduire de l*'*air froid à des emplacements correspondant aux espaces d*'*écartement de refroidissement (97) formés entre lesdites batteries individuelles (62) ;
- au moins un orifice d*'*évacuation (50c) est formé dans au moins une paroi supérieure de chaque boîtier de batterie (50) ; et
- un tube central (18) s*'*étend longitudinalement le long d*'*un centre du corps de véhicule (11) et forme un passage pour l*'*air froid à l'intérieur, chaque boîtier de batterie (50) étant situé sur un côté inférieur dudit tube central (18) et ledit tube central (18) étant relié à des moyens de ventilation (46) afin de refroidir ladite unité de batterie (99) par l*'*intermédiaire desdits orifices d*'*introduction et d*'*évacuation (50b, 50c).

2. Unité de batterie selon la revendication 1, dans laquelle ledit corps de véhicule (11) comprend un cadre avant (12) pour supporter une roue avant (16F), un cadre arrière (13) pour supporter une roue arrière (16R) et un cadre intermédiaire (14) reliant entre eux lesdits cadres avant et arrière, ladite unité de batterie (99) étant suspendue sous ledit cadre intermédiaire (14) et créant un repose pied sur sa surface supérieure s*'*étendant le long dudit cadre intermédiaire (14).

3. Unité de batterie selon l'une ou l'autre des revendications 1 ou 2, dans laquelle ladite unité de batterie (99) est supportée sur ledit tube central (18) dudit véhicule alimenté en énergie électrique, ce dernier étant du type deux roues.

4. Unité de batterie selon l*'*une quelconque des revendications 1 à 3, dans laquelle ledit véhicule alimenté en énergie électrique étant du type deux roues, et le corps de véhicule ayant un capot (55, 54, 27), ledit orifice d*'*évacuation (50c) est en communication avec un espace interne dudit capot, pour évacuer l*'*air qui s*'*y trouve.

5. Unité de batterie selon l*'*une quelconque des revendications 1 à 4, et comprenant de plus un conduit d*'*air de refroidissement (36) et un aimant (37) monté fonctionnellement sur une paroi interne dudit conduit d*'*air de refroidissement, pour attirer les particules le traversant.

6. Unité de batterie selon la revendication 1, dans laquelle lesdits moyens de ventilation (46) délivrent de l*'*air froid audit boîtier de batterie (50), et sont reliés à un côté d*'*un cadre principal dudit véhicule alimenté en énergie électrique.

7. Unité de batterie selon la revendication 1, dans laquelle lesdits moyens de ventilation (46) communiquent avec lesdits orifices d*'*introduction (50b) pour évacuer de manière forcée l*'*air de chaque boîtier de batterie (50).
